Europäisches Patentamt

European Patent Office

Office européen des brevets

(11) Veröffentlichungsnummer: **0 163 206**
**A2**

## EUROPÄISCHE PATENTANMELDUNG

(21) Anmeldenummer: **85106015.2**

(22) Anmeldetag: **15.05.85**

(51) Int. Cl.⁴: **G 01 N 15/14**
**G 01 N 15/12, G 01 N 1/00**

(30) Priorität: **29.05.84 DE 3420018**

(43) Veröffentlichungstag der Anmeldung:
**04.12.85 Patentblatt 85/49**

(84) Benannte Vertragsstaaten:
**AT BE CH DE FR GB IT LI LU NL SE**

(71) Anmelder: **Max-Planck-Gesellschaft zur Förderung der Wissenschaften e.V.**
**Bunsenstrasse 10**
**D-3400 Göttingen(DE)**

(72) Erfinder: **Kachel, Volker, Dr.-Ing.**
**Primelstrasse 74**
**D-8039 Puchheim(DE)**

(74) Vertreter: **Dreiss, Hosenthien & Fuhlendorf**
**Gerokstrasse 6**
**D-7000 Stuttgart 1(DE)**

(54) Vorrichtung zur Messung bestimmter Eigenschaften in einem Trägermedium suspendierter Partikel.

(57) Vorrichtung zur Messung bestimmter Eigenschaftem in einem Trägermedium suspendierter Partikel mit einer partikelfreie Flüssigkeit enthaltenden Meßkammer, aus der die partikelfreie Flüssigkeit über eine Meßzone abfließt, wobei die Partikelsuspension aus der Austrittsöffnung einer Zuführungseinrichtung in den Bereich der Meßzone (4) austritt. Dabei wird die Zuführungseinrichtung durch einen Mehrkanalinjektor (1) gebildet, der mindestens zwei Kanäle (10, 11, 31 bis 33, 35 bis 39) aufweist, die in einen ihnen gemeinsam zugeordneten Raum (12) münden. Aus diesem Raum tritt die Partikelsuspension durch die genannte Austrittsöffnung (13) in den Bereich vor der Meßzone (4) aus.

Fig.1

EP 0 163 206 A2

## Beschreibung

Die Erfindung betrifft eine Vorrichtung zur Messung bestimmter Eigenschaften in einem Trägermedium suspendierter Partikel mit einer partikelfreie Flüssigkeit enthaltenden Meßkammer, aus der die partikelfreie Flüssigkeit über eine Meßzone abfließt, wobei die Partikelsuspension aus der Austrittsöffnung einer Zuführungseinrichtung in den Bereich der Meßzone austritt.

Derartige Durchfluß-Partikelmeßsysteme sind bekannt. Sie werden in der medizinischen und biologischen Meßtechnik zur Analyse der Eigenschaften von Zellen verwendet; in der chemischen und pharmazeutischen Meßtechnik dienen sie zur Ermittlung von Größenverteilungen von Staubpartikeln partikelförmiger Polymerisationsprodukte. Man kann dabei auch die Ergebnisse von Zerkleinerungsprozessen bestimmen.

Ganz allgemein gesprochen werden dabei die zu vermessenden Partikel in einem Trägermedium (partikelfreie Flüssigkeit) suspendiert und von diesem durch eine Meßöffnung bzw. Meßzone transportiert. Bei Meßsystemen, die z.B. auf elektrischem Wege die Partikelgröße bestimmen, erzeugen die Partikel in einer Meßöffnung, die die Meßzone darstellt, eine der Partikelgröße proportionale elektrische Widerstandsänderung (US-PS 2656 508);

bei optischen Durchfluß-Meßsystemen wird an einer ganz bestimmten Stelle, die die Meßzone darstellt, die Fluoreszenz oder
das Streulicht bestimmt (vgl. DE-PS 26 56 654). Allen Systemen
ist gemeinsam, daß die Partikel einer genauen Bahnkontrolle
unterworfen werden müssen, weil die Partikelbahnen als Parameter einen sehr starken Einfluß auf die Meßergebnisse haben.
Ohne Bahnkontrolle zeigen sich starke Meßfehler. Das rührt z.B.
bei den Systemen zur Messung der Partikelfluoreszenz daher, daß
eine völlig homogene Anregungsbeleuchtung über einen größeren
Bereich nicht möglich ist und demgemäß Partikel auf unterschiedlichen Bahnen trotz gleicher Menge fluoreszierender Farbstoffe unterschiedliche Fluoreszenzsignale abgeben. Bei elektrischen Systemen ergeben sich die Einflüsse unterschiedlicher
Partikelbahnen durch die Meßöffnung als Folge der Inhomogenitäten des elektrischen Feldes.

Für genaue Messungen müssen also die Partikel auf einer genau
definierten Bahn durch die Meßzone geleitet werden. Dies geschieht unter Verwendung des Prinzips der hydrodynamischen
Fokussierung (vgl. z.B. DE-PS 20 13 799). Hierbei wird die Partikelsuspension durch die hydrodynamischen Kräfte der partikelfreien Flüssigkeit, deren Strömung sich auf die Meßzone hin
verengt, auf eine entsprechend eng begrenzte Bahn beschränkt
und dadurch die genannten Meßfehler vermieden. Die Partikelsuspension tritt dabei in den Bereich vor der Meßöffnung aus einer Zuführungskapillare durch eine Austrittsöffnung von 0,1 bis 0,2 mm Durchmesser in die partikelfreie sich zur Meßzone hin verengende laminare Strömung ein.

Bei der routinemäßigen Messung vieler aufeinanderfolgender Proben, z.B. in der klinischen Diagnostik von Zellproben, wird die Zuführungseinrichtung, z.B. eine Kapillare, über die die Partikelsuspension in den Bereich vor der Meßzone eintritt, nacheinander von sehr unterschiedlichen Zellen durchlaufen. Diese dürfen sich nicht miteinander vermischen, wenn man saubere Meßergebnisse erzielen will. Um eine solche "Verschleppung" zu vermeiden, muß zwischen verschiedenen Proben (Partikelsuspensionen) die Zuführungseinrichtung gereinigt werden. Wenngleich verschiedene Maßnahmen zur Reinigung der Vorrichtungen zwischen verschiedenen Messungen bekannt geworden sind (vgl. DE-PS 24 22 129 und DE-OS 27 50 447), ist dieser Vorgang immer noch außerordentlich umständlich und geht für klinische Reihenuntersuchungen immer noch nicht schnell genug vor sich. Man kann bei den bekannten Einrichtungen die Spülung auch nicht einfach durch höhere Drücke beschleunigen, um so den erforderlichen Durchsatz einer bestimmten Menge Spülflüssigkeit zu erreichen, da die Austrittsöffnung der Zuführungseinrichtung oder die eigentliche Meßzone (Meßöffnung) der Meßkammer eine sehr starke Drosselung der Spülströmung bewirken. Daher braucht man bei den bekannten Einrichtungen eine relativ lange Zeit, bis die notwendige Menge von Spülflüssigkeit entweder in Vorwärts- oder in Rückwärtsrichtung durch die verschiedenen Öffnungen (Austrittsöffnung, Meßöffnung) hindurchgelaufen ist. Diese Drosselung behindert auch die kontinuierliche Einführung von Meßproben und Spülflüssigkeit in Vorwärtsrichtung. Man kann nicht in kurzen Abständen mehrere unterschiedliche Proben wechselweise messen, da jede Probe immer wieder frisch durch das gesamte Zuführungssystem geleitet werden muß.

Aufgabe der Erfindung ist es demgemäß, eine Vorrichtung der eingangs genannten Art zu schaffen, bei der eine schnelle und einfache Reinigung zwischen verschiedenen Proben mit verschiedenen Zellen möglich ist. Damit sollen insbesondere klinische Untersuchungsreihen schnell gemessen werden können. Dabei soll der konstruktive Aufwand möglichst gering sein, d.h. die Vorrichtung muß einfach herstellbar und bedienbar sein. Dabei soll das gleichermaßen für elektrische wie auch optische Messungen gelten, so daß die üblichen Anforderungen an die Präzision sowohl elektrischer als auch optischer Messungen gleichermaßen erfüllt sind. Diese bedingen neben der erwähnten Bahnkontrolle auch die leichte Möglichkeit der Zugänglichkeit zur Meßöffnung zur Beobachtung durch Objektive bei Fluoreszenz- oder Streulichtmessungen.

Erfindungsgemäß wird diese Aufgabe dadurch gelöst, daß die Zuführungseinrichtung durch einen Mehrkanalinjektor gebildet wird, der mindestens zwei Kanäle aufweist, die in einen ihnen gemeinsam zugeordneten Raum münden, aus dem die Partikelsuspension durch die genannte Austrittsöffnung in den Bereich vor der Meßzone austritt.

Das Wesentliche der Erfindung ist demnach u.a., daß die Zuführungseinrichtung für die Partikelsuspension - wie bekannt - nicht nur einen Kanal sondern zwei Kanäle aufweist. Diese vereinigen sich an ihrem Ende und bilden einen ihnen gemeinsam zugeordneten Raum. Aus diesem Raum tritt dann die Partikelsuspension in die Meßkammer, d.h. in den Bereich vor der Meßzone bzw. Meßöffnung (bei elektrischen Systemen) aus, wo sie hydrodynamisch fokussiert und durch die Meßzone hindurchgeleitet werden, in der die elektrische oder optische Messung stattfindet. Die Vereinigung von zwei Kanälen ermöglicht es, an einen Kanal eine Unterdruckquelle anzuschließen und somit das gesamte Leitungssystem sehr schnell mit Spülflüssigkeit zu Reinigungszwecken zu durchströmen, ohne daß die Spülflüssigkeit durch die engen Drosselstellen der Austrittsöffnung der Zuführungseinrichtung oder der Meßzone hindurchtreten muß. Dies ist auch der wesentliche Unterschied zur US-PS 3,793,587. Durch ein Eintreten von partikelfreier Flüssigkeit aus der Meßkammer in das Leitungssystem, also praktisch "rückwärts", wird der Spülvorgang weiter verbessert. Sieht man in einer der mit einem Kanal verbundenen Leitungen noch eine Saug/Druckpumpe vor und richtet man das gesamte System so aus, daß der Mehrkanalinjektor zunächst zur Aufnahme von Partikelsuspension in einen Behälter mit Partikelsuspension eintauchen und danach in die Meßkammer eintauchen kann, so ist es möglich, die Bereiche des gesamten Leitungssystems, die überhaupt mit Partikeln in Berührung kommen, extrem gering zu halten. Außerdem kann in besonders einfacher und schneller Weise eine präzise Dosierung erfolgen.

Ausführungsbeispiele der Erfindung und ihrer vorteilhaften Weiterbildungen werden im folgenden unter Bezugnahme auf die beigefügten Zeichnungen näher beschrieben. Es stellen dar:

Figur 1    ein erstes Ausführungsbeispiel;

Figur 2    einen Bereich von Fig. 1 in vergrößerter
           Darstellung;

Figur 3    ein zweites Ausführungsbeispiel;

Figur 4    eine Draufsicht auf dasselbe Ausführungsbeispiel nach Fig. 3;

Figur 5    verschiedene Querschnittsformen eines
           Mehrkanalinjektors;

Figur 6    eine Draufsicht auf ein drittes Ausführungsbeispiel;

Figur    7    einen Schnitt in Richtung der Pfeile
              VII-VII in Fig. 6;

Figur    8    ein viertes Ausführungsbeispiel;

Figur    9    einen Schnitt entlang der Pfeile IX-IX.


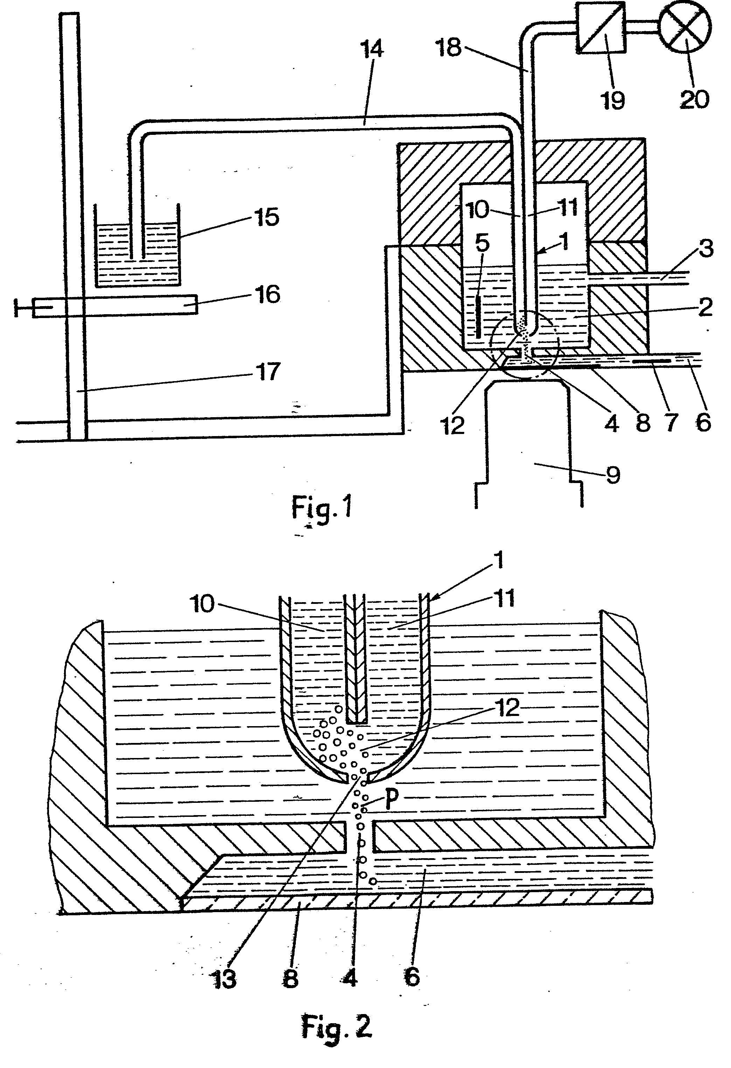

In Fig. 1 taucht der Mehrkanalinjektor in eine Meßkammer 2. Der Meßkammer 2 wird partikelfreie Flüssigkeit über den Kanal 3 zugeführt. Am Boden der Meßkammer 2 befindet sich eine Meßöffnung 4, durch die die partikelfreie Flüssigkeit abfließen kann. Sie bildet im Ausführungsbeispiel die eingangs erwähnte Meßzone. Beidseitig der Meßöffnung 4 befinden sich die Elektroden 5 und 7. Der Kanal 6 ist in die Unterseite der Meßkammer 2 eingelassen und mit der transparenten Abdeckung 8 abgedeckt, so daß die Meßöffnung 4 mit Hilfe eines Objektivs 9 beobachtet und Fluoreszenz nach dem Auflichtbeleuchtungsprinzip oder Streulicht (Rücksteuerung) gemessen werden kann.


Wird in bekannter Weise dafür gesorgt, daß in der Meßkammer 2 ein höherer Druck als im Kanal 6 entsteht, so strömt partikelfreie Flüssigkeit durch die Meßöffnung 4. Die Strömung verjüngt sich vor der Meßöffnung 4 auf diese hin, so daß die Partikelsuspension, die aus der Austrittsöffnung 13 des Mehrkanalinjektors 1 in den Bereich vor der Meßöffnung 4 austritt, zur Meßöffnung hin "fokussiert" wird. Handelt es sich nun bei der partikelfreien Flüssigkeit um einen Elektrolyt, so ergibt sich beim Durchtritt eines Partikels durch die Meßöffnung 4 eine Änderung des Widerstands zwischen den Elektroden 5, 7 und damit bei eingeprägtem Strom der Spannungspeak, dessen Höhe ein Maß für das Volumen des hindurchgetretenen Partikels ist.

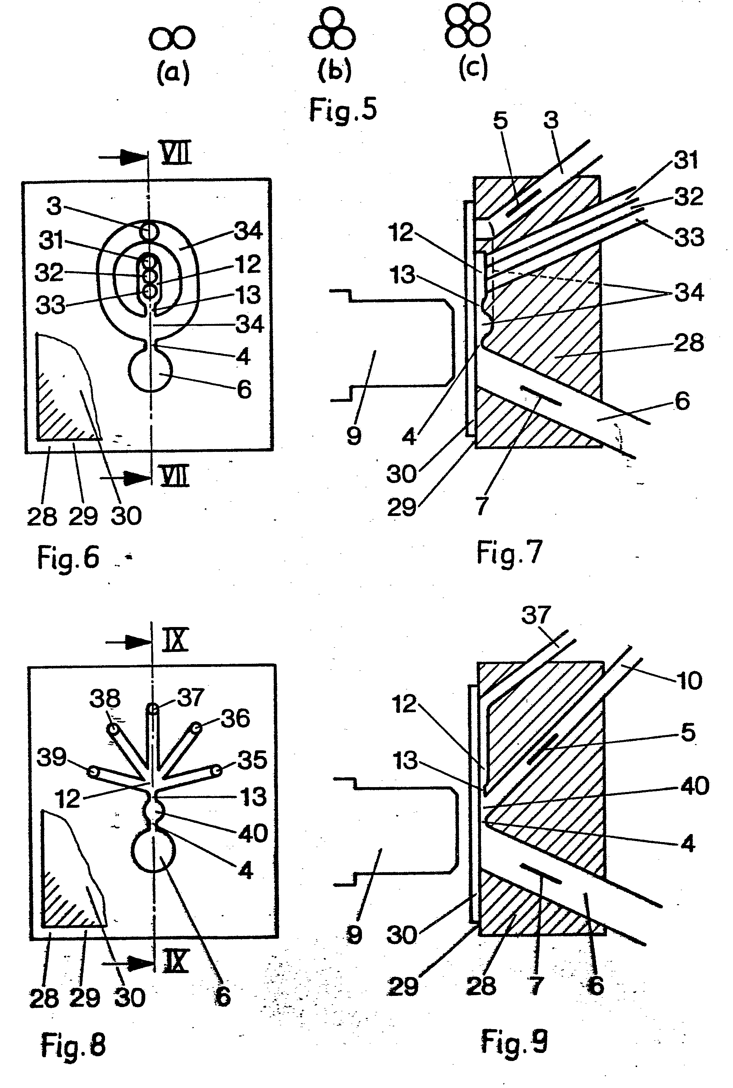

Der Mehrkanalinjektor 1 wird im Ausführungsbeispiel durch zwei zueinander parallele Kanäle 10 und 11 gebildet. Der Querschnitt der Kanäle 10, 11 kann kreisförmig (vgl. Fig. 5 (a), halbkreisförmig, oval, usw. sein. Das hängt von der Art und Weise der Herstellung ab. Die Herstellung kann z.B. derart erfolgen, daß zwei Glasröhrchen miteinander verschmolzen werden.

Wesentlich an dem unteren Teil des Mehrkanalinjektors 1 ist u.a., daß die Kanäle 10, 11 am unteren Ende in einen ihnen gemeinsam zugeordneten Raum 12 münden, der bei der Messung in Strömungsrichtung vor der Austrittsöffnung 13 liegt.

Der Kanal 10 ist mit einer Leitung 14 verbunden, die in einen Behälter 15 eintaucht, der Probensuspension, also die Partikel, die beim Durchtritt durch die Meßöffnung 4 gemessen werden soll, in Suspension enthält. Die Partikel sind - allgemein gesprochen - in einem Trägermedium, z.B. einer Flüssigkeit, suspendiert. Der Behälter 15 steht auf einer Plattform 16, die am Gestell 17 höhenverstellbar ist. Der Kanal 11 ist über eine Leitung 18 mit einem Ventil 19 verbunden, an dessen anderer Seite eine Unterdruckquelle 20 angeschlossen ist.

Öffnet man das Ventil 19, so saugt der von der Unterdruckquelle 20 erzeugte Unterdruck über Leitung 18, Kanal 11, Raum 12, Kanal 10, Leitung 14 aus dem Behälter 15 Partikelsuspension an. Dies kann, je nach Höhe des Unterdrucks, (z.B. 0,1-0,2 bar), sehr schnell erfolgen. Die Partikelsuspension gelangt in den unteren Teil des Mehrkanalinjektors 1. Ist dies erreicht, wird Ventil 19 geschlossen, dann verstellt man die Plattform 16 in der Höhe derart, daß der Druck der Partikelsuspension in dem Mehrkanalinjektor größer als der Druck der partikelfreien Flüssigkeit in der Meßkammer 2 ist. Dann tritt Partikelsuspension aus dem Raum 12 über die Austrittsöffnung 13 in den Bereich vor der Meßöffnung 4 aus und wird dort von der partikelfreien Lösung erfaßt und durch die Meßöffnung 4 hindurchgeführt.

Nach Beendigung der Messung wird der Behälter 15 mit der Partikelsuspension entfernt und durch einen Behälter mit Spülflüssigkeit ersetzt. Die Leitung 14 wird in die Spülflüssigkeit eingetaucht. Dann wird das Ventil 19 wieder für eine ausreichende Zeit geöffnet, so daß die Spülflüssigkeit durch Leitung 14, Kanal 10, Raum 12, Kanal 11, Leitung 18 hindurchgesaugt und damit das Leitungssystem, einschließlich der Austrittsöffnung 13 des Mehrkanalinjektors 1, gesäubert. Der Spülvorgang kann in relativ kurzer Zeit abgeschlossen werden, da das genannte Kanalsystem keine starke Drosselung enthält, so daß der Unterdruck in der Lage ist, eine kräftige Spülströmung zu erzeugen. Dabei wird sogar noch durch Austrittsöffnung 13 partikelfreie Flüssigkeit aus der Meßkammer 2 in den Raum 12 eingesaugt, also, bezüglich der Strömung bei der Messung, in "Rückwärtsrichtung". Nach kurzer Zeit ist das System dann wieder für die Messung der nächsten Probe bereit.

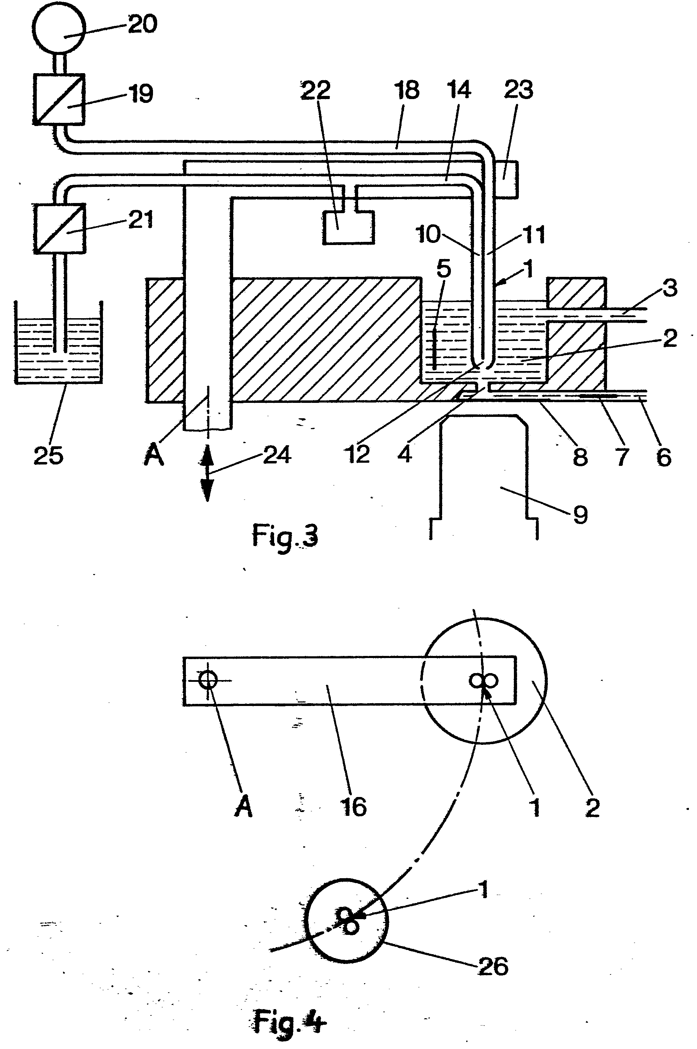

Das Ausführungsbeispiel nach Fig. 3 unterscheidet sich von dem nach Fig. 1 und 2 durch eine weitere Stufe der Automation. Zunächst ist, wie nach Fig. 1 und 2, die Leitung 18 über das Ventil 19 mit der Unterdruckquelle 20 verbunden. Die Leitung 14 steht über ein weiteres Ventil 21 mit einem Behälter 25 in Verbindung, der mit partikelfreier Flüssigkeit gefüllt ist. Mit der Leitung 14 ist ferner eine als Saug- oder Drucksystem mit kleinem Volumen arbeitende Saug/Druck-Pumpe 22 verbunden, die im einfachsten Fall z.B. als motorisch betätigte Spritze zur Partikeldosierung ausgebildet ist.

Der Mehrfachinjektor 1 und die sich an die Kanäle 10, 11 anschließenden Leitungen 14, 18 sind nun in Abweichung von Fig. 1 und 2 auf einem Schwenkarm 23 angeordnet, der, wie durch den Pfeil 24 angedeutet, auf und ab beweglich, und, nach der Aufwärtsbewegung, um die Achse A schwenkbar ist. Die Schwenkung kann erfolgen, nachdem der Schwenkarm 23 so weit emporgehoben

0163206

worden ist, daß der Mehrkanalinjektor 1 nicht mehr in die Meßkammer 2 eintaucht. Die Schwenkung erfolgt so weit, bis der
Mehrkanalinjektor 1 über einem Behälter 26 mit Partikelsuspension steht. Dann wird der Schwenkarm 23 wieder abwärts bewegt, bis der Mehrkanalinjektor in den Behälter 26 eintaucht.
In dieser Position beginnt der Meßvorgang, in dem (Ventil 19, 21
sind geschlossen) die Saug/Druck-Pumpe 22 als Saugpumpe in
Aktion tritt und "rückwärts", also über die Austrittsöffnung 13,
ein bestimmtes genau definiertes Meßvolumen der Partikelsuspension im Milliliter- oder Mikroliterbereich in den Raum 12 und 10
saugt. Der Ansaugvorgang erfolgt also an der Spitze des Mehrkanalinjektors 1. Dann wird der Schwenkarm 23 angehoben,
geschwenkt und wieder in die Meßkammer 2 abgesenkt. Die Saug/
Druck-Pumpe 22 wird umgepolt, arbeitet jetzt als Druckpumpe
und drückt das vorher angesaugte Meßvolumen der Partikelsuspension durch die Austrittsöffnung 13 in den Bereich vor
der Meßöffnung 4 der Meßkammer. Dabei findet die Messung statt.

Nach Abschluß der Messung werden die beiden Ventile 19 und 21
geöffnet. Der Unterdruck der Unterdruckquelle 20 saugt dann
partikelfreie Flüssigkeit aus dem Behälter 25 durch die
Leitung 14, Kanal 10, Raum 12 mit Austrittsöffnung 13, Kanal 11,
Leitung 18 hindurch und bewirkt damit eine intensive Reinigung
dieses gesamten Leitungssystems. Zugleich geht die Saug/Druck-
Pumpe 22 in ihre Ruhestellung, in der sie für den nächsten Meßvorgang bereitsteht.

Ein erheblicher Vorteil der Ausbildung der Erfindung nach
der Fig. 3 und 4 gegenüber dem Ausführungsbeispiel nach
Fig. 1 und 2 besteht also darin, daß lediglich ein sehr viel
geringerer Teil des gesamten Leitungs- und Rohrsystems mit
der Partikelsupension überhaupt in Berührung kommt und daher
durch sie kontaminiert werden kann. Die Reinigung erfolgt
entsprechend schneller. Nach Abschluß der Spülung schwenkt der
Schwenkarm 23 wieder über den Behälter 26, wo er die nächste
Probe aufnehmen kann. Die Ventile 19 und 21 werden wieder
geschlossen.

Fig. 5 zeigt unter (a), (b) und (c) mögliche Querschnitte von
Mehrkanalinjektoren, wobei der bei (a) gezeigte Querschnitt
der eines zweikanaligen Mehrkanalinjektors ist, wie er der
Beschreibung der Ausführungsbeispiele nach Fig. 1 und 2 bzw. 3
und 4 zugrunde lag. Bei (b) ist ein dreikanaliger, bei (c) ein
vierkanaliger Mehrkanalinjektor dargestellt. Über die weiteren
Kanäle kommen z.B.Eichsuspensionsmessungen zwischen die
eigentlichen Partikelmessungen eingeschoben werden, ohne daß
jeweils der Hauptkanal dafür benutzt werden muß. Alle Kanäle,
die von verschiedenen Einführungsstellen über entsprechende
Leitungen beschickt werden können, münden jeweils in einem
ihnen gemeinsam zugeordneten Raum (entsprechend Raum 12 nach Fig.
2), aus dem eine Austrittsöffnung in den Bereich vor der Meßöffnung oder Meßzone der Meßkammer führt. Dieser Raum ist von
der Geometrie her so zu gestalten, daß keine Nischen und Ecken im Inneren entstehen, die eine schnelle Spülung behindern.

Die Fig. 6, 7 und 8, 9 zeigen die Ausführung von Mehrkanalinjektoren in sog. "Plantechnik". Die wesentlichen Strukturen der Räume und Leitungen im wichtigen Bereich, d.h. im
Bereich der Vereinigung der verschiedenen Kanäle und der Partikelsuspension in den Strom des partikelfreien Elektrolyts
(zur hydrodynamischen Fokussierung), sowie ferner die Meßöffnung oder -zone, sind in eine plane Fläche aus Glas oder Kunststoff (z.B. Plexiglas) eingearbeitet, d.h. eingefräst oder
eingeätzt. Die Fläche mit den eingearbeiteten Leitungen und
Kanälen wird dann durch eine Glasplatte abgedeckt, die durch
einen Rahmen aufgepreßt wird oder durch geeigneten Klebstoff
aufgeklebt ist. Die plane Struktur hat den wesentlichen Vorteil,
daß sämtliche Leitungen von außen einzusehen sind. Man erhält
damit ideale Verhältnisse für optische Messungen. Man kann mit
Objektiven in die unmittelbare Nähe der strömenden Partikel
gelangen. Die Planartechnik bietet auch den herstellungstechnischen Vorteil, weil die feinen Strukturen der Leitungen und
Kammern in einer Ebene durch Fräsen, Sägen, Bohren oder Ätzen
eingearbeitet werden können.

Die Figuren 6 und 7 zeigen einen Block 28 aus Plexiglas, in
dessen Fläche 29 die Leitungen und Kammern eingearbeitet sind.
Die Fläche 29 ist mit einer Glasplatte 30 abgedeckt. Die Kanäle 31, 32 und 33 verlaufen schräg durch den Block 28 hindurch (vgl. Fig.7) und münden kurz vor der Fläche 29 in den Raum 12. Dieser Raum 12 steht über die Austrittsöffnung 13 mit einem Ringkanal 34 in Verbindung, der die Mündung der Kanäle 31, 32, 33 in den Raum 12 umgibt (vgl.Fig.6) und mit dem Kanal 3 zur Zuführung partikelfreier Flüssigkeit in Verbindung steht. Die partikelfreie Störmung läuft also vom Kanal 3 in den Ringkanal 34. Dabei tritt dann aus dem Raum 12 durch die Austrittsöffnung 13 die Partikelsuspension in den Ringkanal 34 ein, wobei die Austrittsöffnung 13 auf der einen Seite durch die Glasplatte 30 begrenzt wird. Die Meßöffnung 4 ist als schmale Durchtrittsstelle zwischen Ringkanal 34 und Abflußkanal 6 ausgebildet. Der Ringkanal sorgt für eine symmetrische Ausströmung und Fokussierung der aus der Austrittsöffnung 13 austretenden Partikelsuspension. Der Bereich des Ringkanals 34 zwischen Austrittsöffnung 13 und Meßöffnung 4 ist auch hier der Bereich vor der Meßöffnung, in dem die hydrodynamisch fokussierend Strömung der partikelfreien Flüssigkeit entsteht. Die Meßöffnung verliert hier gegebenenfalls ihren eindeutigen Charakter als eine "Öffnung" eines Behälters und wird zu einer Meßzone, in der, ganz allgemein gesprochen, Beobachtungen und Messungen an den durchtretenden Partikeln vorgenommen werden können. Sie ist immer dadurch definiert, daß in ihr als Folge der hydrodynamischen Fokussierung eine eindeutige Bahnkontrolle durch Vereingung des Partikelstromfadens gegeben ist.

Die Fig. 8 und 9 zeigen ein weiteres Ausführungsbeispiel, bei dem Kanäle 35, 36, 37, 38, 39 schräg in den Block 28 eingearbeitet sind und in der Fläche 29 sternförmig auf den Raum 12 hin zulaufen, in dem sie sich treffen. Dieser Raum 12 steht dann über die Austrittsöffnung 13 mit dem Bereich 10 in Verbindung. Dort mündet auch der Kanal 10 mit partikelfreier Flüssigkeit. Er trifft schräg auf die Glasscheibe 30, so daß keine Strömungskomponente "rückwärts" in den Raum 12 hinein entsteht, sondern die partikelfreie Flüssigkeit über die Meßöffnung 4 direkt in den Abflußkanal 6 übertritt, wobei beim Vorbeiströmen an der Austrittsöffnung 13 die Partikelsuspension mitgenommen und hydrodynamisch fokussiert wird.

- Ende der Beschreibung -

DREISS, HOSENTHIEN & FUHLENDORF

HANS LANGOSCH
Dipl.-Ing. (1963-1981)
UWE DREISS
Dr. jur., Dipl.-Ing., M. Sc.
HEINZ HOSENTHIEN
Dr.-Ing., Dipl.-Ing.
JÖRN FUHLENDORF
Dipl.-Ing.

PATENTANWÄLTE

Beim Europäischen Patentamt zugelassene Vertreter
European Patent Attorneys

D-7000 STUTTGART 1
GEROKSTRASSE 6
TF (0711) 24 67 34/44
TG IDEAPAT 0163206
TX 7-22 247 idea d

P  für Besucher

┌ DREISS, HOSENTHIEN & FUHLENDORF, D-7000 STUTTGART 1 ┐

Anmelder:

Max Planck-Gesellschaft
zur Förderung der Wissenschaften e.V.
Bunsenstr. 10
3400  Göttingen

└                                    ┘

| Amtl. Akt. Z.<br>Off. Ser. No. | Ihr Zeichen<br>Your Ref. | Unser Zeichen<br>Our Ref.<br>2720-028 | Datum<br>Date<br>5. Mai 1984 D/sw |
|---|---|---|---|

Titel:     Vorrichtung zur Messung bestimmter
           Eigenschaften in einem Trägermedium
           suspendierter Partikel.

## Patentansprüche

1. Vorrichtung zur Messung bestimmter Eigenschaften in einem Trägermedium suspendierter Partikel mit einer partikelfreie Flüssigkeit enthaltenden Meßkammer, aus der die partikelfreie Flüssigkeit über eine Meßzone abfließt, wobei die Partikelsuspension aus der Austrittsöffnung einer Zuführungseinrichtung in den Bereich der Meßzone (4) austritt, dadurch gekennzeichnet, daß die Zuführungseinrichtung durch einen Mehrkanalinjektor (1) gebildet wird, der mindestens zwei Kanäle (10, 11; 31 bis 33; 35 bis 39) aufweist, die in einen ihnen gemeinsam zugeordneten Raum (12) münden, aus dem die Partikelsuspension durch die genannte Austrittsöffnung (13) in den Bereich vor der Meßzone (4) austritt.

Postscheckkonto Stuttgart 507 71-705 (BLZ 600 100 70) · Dresdner Bank Stuttgart 1 919 854 (BLZ 600 800 00)

2. Vorrichtung nach Anspruch 1, dadurch gekennzeichnet, daß der Mehrkanalinjektor (1) durch parallele Kanäle (10, 11) gebildet wird, die an ihrem in die Meßkammer (2) eintauchenden Ende in den ihnen gemeinsam zugeordneten und mit der Austrittsöffnung (13) versehenen Raum (12) münden.

3. Vorrichtung nach Anspruch 1 oder 2, dadurch gekennzeichnet, daß der Mehrkanalinjektor (1) auf einem auf- und ab verschiebbaren und in einer senkrecht zur Auf- und Abbewegung liegenden Ebene schwenkbaren Schwenkarm (23) befestigt ist.

4. Vorrichtung nach Anspruch 3, dadurch gekennzeichnet, daß im Schwenkbereich des Mehrkanalinjektors (1) ferner ein Behälter (26) mit Partikelsuspension anordenbar ist.

5. Vorrichtung nach Anspruch 1, dadurch gekennzeichnet, daß der genannte Raum (12) vor der Austrittsöffnung (13) des Mehrkanalinjektors (1) in die Oberfläche (29) eines vorzugsweise aus Glas oder Kunststoff gebildeten Blocks (28) eingebracht ist, daß die Austrittsöffnung (13) durch einen Durchgang zwischen Material des Blocks (28) und einer den Block (28) abdeckenden Platte (30) gebildet wird, daß ferner die Austrittsöffnung (13) mit einem weiteren in die Oberfläche (29) des Blocks (28) eingearbeiteten und von der Platte (30) abgedeckten Bereich (34, 37) in Verbindung steht, dem die partikelfreie Flüssigkeit zugeführt wird, daß ferner dieser Bereich mit der Meßzone (4) in Verbindung steht, die ebenfalls durch einen Durchgang zwischen dem Material des Blocks (28) und der Platte (30) gebildet wird, und daß sich auf der anderen Seite der Meßzone (4) der Abflußkanal (6) anschließt.

6. Vorrichtung nach Anspruch 5, dadurch gekennzeichnet, daß die Platte (30) aus transparentem Material hergestellt ist.

7. Vorrichtung nach Anspruch 1 oder einem der folgenden, dadurch gekennzeichnet, daß ein Kanal (11) des Mehrkanalinjektors über ein Ventil (19) mit einer Unterdruckquelle (20) verbunden ist, und daß der andere Kanal mit einem Behälter (15) partikelfreier Flüssigkeit in Verbindung steht, und beim Öffnen des Ventils (19) die partikelfreie Flüssigkeit von dem Behälter (15) über die beiden Kanäle (10, 11) unter Einbeziehung des Raums (12) mit der Austrittsöffnung (13) durch die Unterdruckquelle (20) angesaugt wird.

8. Vorrichtung nach Anspruch 1 oder einem der folgenden, dadurch gekennzeichnet, daß ein Kanal (10) mit einer Saug/-Druckpumpe (22) verbunden ist, die als Saugpumpe bei Eintauchen des Mehrkanalinjektors (1) in einen Behälter (26) mit Partikelsuspension ein definiertes Meßvolumen der Partikelsuspension ansaugt und bei Eintauchen des Mehrkanalinjektors (1) in die Meßkammer (2) als Druckpumpe das Meßvolumen in die Meßkammer (2) einleitet.


- Ende der Ansprüche -

1/3

0163206

Fig.1

Fig. 2

Fig.3

Fig.4

0163206

(a)   (b)   (c)

Fig.5

Fig.6

Fig.7

Fig.8

Fig.9